# EUROPÄISCHE PATENTSCHRIFT

(11) **EP 1 491 086 B1**
(45) Veröffentlichungstag und Bekanntmachung des Hinweises auf die Patenterteilung: **10.05.2006**
(21) Anmeldenummer: 04006307.5
(22) Anmeldetag: 17.03.2004
(51) Int. Cl.: A01F 15/04

(54) **Vorrichtung und Verfahren zur Erfassung und Regelung der Ballenlänge**
Device and method for detecting and controlling bale length
Dispositif et procédé de mesure et de réglage de la longueur de balles

(30) Priorität: 26.03.2003 DE 10313492
(43) Veröffentlichungstag der Anmeldung: 29.12.2004
(73) Patentinhaber: Maschinenfabrik Bernard Krone GmbH, 48480 Spelle (DE)
(72) Erfinder: Krone, Bernard, Dr.-Ing., 48480 Spelle (DE); Martensen, Klaus, Dr.-Ing., 49477 Hörstel (DE)

(56) Entgegenhaltungen:
- EP-A- 0 573 342
- EP-A- 0 876 753
- DE-A- 3 722 741
- DE-C- 3 809 132

## Beschreibung

Die Erfindung betrifft eine Vorrichtung und ein Verfahren zur Erfassung und Regelung der Ballenlänge an einer Aufsammelpresse für landwirtschaftliches Erntegut nach dem Oberbegriff des Anspruchs 1 (siehe z.B. E.P-A- 876 753).

Mit derartigen Aufsammelpressen werden vorwiegend rechteckige Großballen aus Halmgut mit hoher Dichte erzeugt. Dabei ist die Einhaltung einer gleichbleibenden vorgegebenen Ballenlänge für den Transport und die Lagerung der Ballen und für eine eventuelle möglichst genaue Auswertung der Ertragsmengen besonders wichtig.

Diverse Anmeldungen mit Lösungsvorschlägen für unterschiedlichste Messeinrichtungen für die Ballenlänge sind bekannt. In den meisten Fällen wird die Länge über ein als Zackenrad ausgeführtes Messrad, welches durch den Ballenvorschub angetrieben wird und einer daran gekoppelten Mechanik oder einem elektronischen Sensor absolut ermittelt. Nach Erreichen eines voreingestellten Sollwertes wird die Bindung des Ballens ausgelöst. Bei all diesen Messeinrichtungen ist die Wiederholgenauigkeit der Ballenlänge jedoch nicht zufriedenstellend. Viele Faktoren der Gutbeschaffenheit führen zu unterschiedlichen Ballenbeschaffenheiten und Verhalten. Besonders die Gutdichte und die Rückausdehnung des Ballens beeinflussen das Messergebnis durch Schlupf und durch Rückdrehung des Messrades. Eine weitere Ungenauigkeit dieser Ballenlängenmessung besteht darin, dass für den letzten Kolbenhub eines Ballens, der noch nach Auslösung der Bindung erfolgt, mit einem angenommenen Ballenzuwachs gerechnet wird. Tatsächlich kann dieser Hub aber je nach Befüllung der Presskammer extrem variieren und damit auch die Ballenlänge.

Bei der in der DE 38 09 132 C1 vorgeschlagenen Lösung zur Messung der Ballenlänge werden die oben genannten Nachteile der direkten Längenabtastung am Ballen durch ein Messrad dadurch umgangen, dass die Hubzahl des Presskolbens als Messgröße zur Ermittlung der Ballenlänge herangezogen wird. Hierbei wird davon ausgegangen, dass der mit jedem Hub des Presskolbens erreichte Ballenzuwachs eine konstante Größe darstellt, so dass aus diesem Zuwachsmaß pro Hub und der Anzahl der Hübe des Presskolbens die genaue Länge eines Ballens ermittelt werden soll. Da das Ballenzuwachsmaß pro Presskolbenhub nur eine angenommene Größe ist und aus der Praxis jedoch bekannt ist, dass sich die zu verarbeitenden Erntegüter nicht gleichstark verdichten lassen, ist auch diese Methode der Messung der Ballenlänge nicht zufriedenstellend genau genug.

Deshalb liegt der Erfindung die Aufgabe zugrunde, eine Vorrichtung und ein Verfahren zur Ermittlung und Regelung der Ballenlänge für eine Aufsammelpresse der eingangs genannten Art zu schaffen, die möglichst präzise die vorgegebene Ballenlänge sicherstellt.

Zur Lösung der gestellten Aufgabe zeichnet sich die Vorrichtung zur Erfassung und Regelung der Ballenlänge durch die im Anspruch 1 angegebenen Merkmale aus, während gemäß den Merkmalen des Anspruchs 6 ein die Aufgabe lösendes Verfahren aufgezeigt wird. Hinsichtlich der weiteren Ausgestaltung wird auf die Unteransprüche 2 bis 5 und 7 bis 10 verwiesen. Bei einer gattungsgemäßen Aufsammelpresse wird das aufgenommene Erntegut in einem Zubringerkanal angesammelt und vorverdichtet bis eine Drucksensorvorrichtung einen gewünschten Füllgrad feststellt und eine Steuerung die Förderung des gespeicherten Emtegutpaketes aus dem Zubringerkanal über eine, zuvor von einem Rückhalter freigegebene, Presskanaleinlassöffnung in den Presskanal durch einen Zubringerhub auslöst.

Durch dieses vorteilhafte Verfahren der Presskanalbefüllung ist eine optimale und gleichmäßige Ballendichte- und formung gegeben. Unabhängig von Schwadgröße, Fahrgeschwindigkeit oder sonstigen Einflussgrößen, ist das dem Presskanal zugeführte Gutpaket innerhalb einer Einstellung immer sehr gleichmäßig und damit auch der Ballenzuwachs pro Zubringerhub. Dieser Vorteil wird bei der erfindungsgemäßen Vorrichtung und dem Verfahren zur Erfassung und Regelung der Ballenlänge genutzt, um darüber eine möglichst genaue und gleichmäßige Ballenlänge zu erhalten. Dadurch, dass jeder Ballenzuwachs genau gemessen wird, diese Werte über eine gewisse Anzahl gemittelt werden und daraus die Anzahl der erforderlichen Zubringerhübe zur Erlangung der Ballen Soll-Länge errechnet wird, ergibt sich eine präzise Erfassung und Regelung der eingestellten Ballenlänge.

Besonders vorteilhaft wirkt sich dabei an der Erfindung aus, dass alle Ballenzuwachswerte eines Ballens tatsächlich gemessen werden. Gegenüber anderen bisher bekannten Lösungen fließt kein angenommener Wert in die Berechnung ein.

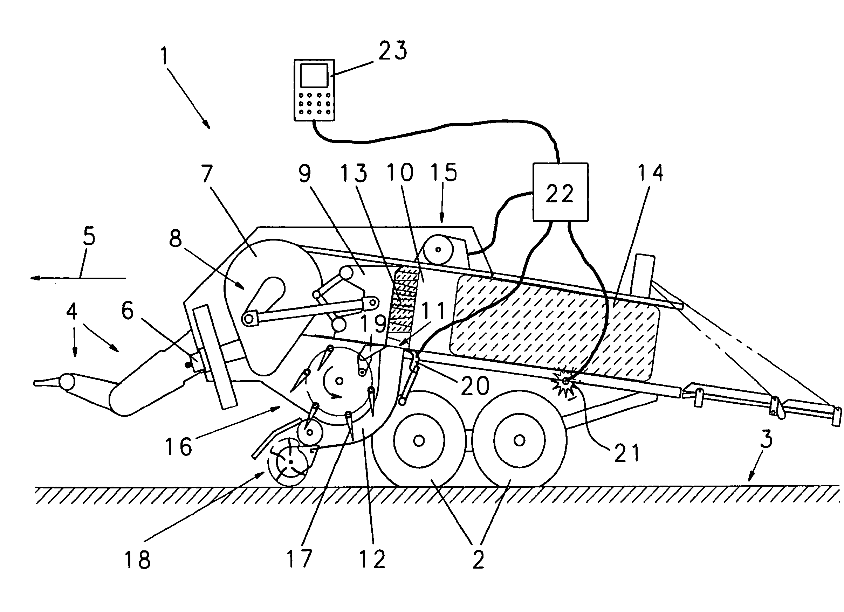

Weitere Vorteile und Einzelheiten ergeben sich aus den Unteransprüchen und einem in der Zeichnung dargestellten Ausführungsbeispiel der Erfindung, das im folgenden beschrieben wird.

Die in der Zeichnung schematisch dargestellte Aufsammelpresse 1 stützt sich mit Rädern 2 auf dem Boden 3 ab und kann über eine Deichsel 4 mit einem nicht dargestellten landwirtschaftlichen Zugfahrzeug verbunden werden. Die Fahrtrichtung ist durch einen Pfeil 5 angedeutet. Die Aufsammelpresse 1 kann jedoch auch als selbstfahrende, selbsttätig angetriebene landwirtschaftliche Arbeitsmaschine ausgestaltet sein. Der Antrieb der dargestellten Ausführungsforrn erfolgt von der Zapfwelle des Zugfahrzeugs aus über eine Gelenkwelle auf die Eingangskupplung 6 und wird von dort über das Hauptgetriebe 7 und dem Kurbeltrieb 8 auf den Presskolben 9 übertragen, der sich in etwa waagerecht in Längsrichtung der Aufsammelpresse 1 im Presskanal 10 hin und herbewegt und so, durch eine Presskanaleinlassöffnung 11 aus einem Zubringerkanal 12 zugeführtes Erntegut 13 zu einem Ballen 14 verdichtet, der dann durch die Bindevorrichtung 15 mit Bindegarn umbunden wird.

Über das Hauptgetriebe 7 wird zudem der Rotorförderer 16 in Richtung des Pfeils drehend angetrieben. Der dargestellte Rotorförderer 16 besitzt sechs Rechen, von denen fünf als reine Förderrechen 17 ausgebildet sind. Sie fördern das von einer Aufnahmevorrichtung 18 vom Boden 3 aufgenommene Erntegut, beispielsweise Stroh, Heu oder angewelktes Grüngut in den Zubringerkanal 12. Der sechste Rechen dient darüber hinaus als Zubringerrechen 19 zur Förderung des Erntegutes 13 aus dem Zubringerkanal 12 durch die Presskanaleinlassöffnung 11 in den Presskanal 10. Dazu wird eine Steuerkurvenbahn (nicht dargestellt) für diesen Zubringerrechen 19 füllgradabhängig von einer Förderstellung in eine Zubringerstellung verschwenkt. Der Füllgrad des Zubringerkanals 12 wird über einen, unterhalb der Presskanaleinlassöffnung 11 angeordneten, mit einer Drucksensoreinrichtung in Wirkverbindung stehenden Rückhalter 20 ermittelt. Bei Erreichen eines vorgewählten Füllgrades gibt der Rückhalter 20 die Presskanaleinlassöffnung 11 frei, worauf dann der Zubringerhub des Zubringerrechens 19 erfolgen kann. Eine Synchronisierungseinrichtung sorgt für eine Synchronisierung der Zubringerbewegung des Zubringerrechens 19 mit der Bewegung des Presskolbens 9. Der Zubringerhub kann dadurch nur dann erfolgen, wenn der Presskolben 9 die Presskanaleinlassöffnung 11 freigibt.

Ansonsten verhindert der Rückhalter 20 ein unkontrolliertes Eindringen von Erntegut aus dem Zubringerkanal 12 in den Presskanal 10 und umgekehrt. So ist gewährleistet, dass immer die gleiche vorgewählte Menge Erntegut 13 pro Zubringerhub dem Presskanal 10 zugeführt wird. Durch diese gleichmäßige Erntegutzufuhr in den Presskanal 10 wird bei der erfindungsgemäßen Aufsammelpresse 1 ein in Dichte und Form besonders gleichmäßiger Ballen 14 erzeugt. Bei der hier beschriebenen Ausführungsform der Ballen Längenmessung wird das Zackenrad 21, welches mit dem Ballen 14 im formschlüssigen Eingriff steht, durch den Ballenvorschub entgegengesetzt der Fahrtrichtung im Presskanal 10, in Drehung versetzt. Bereits hierbei bringt die zuvor beschriebene gleichmäßige Dichte und Form der Ballen einen entscheidenden Vorteil gegenüber Ballen die mit herkömmlichen Pressen gepresst wurden, weil dadurch Ungenauigkeiten durch Schlupf wesentlich verringert werden. Sensormittel bekannter Bauart nehmen die Drehbewegung des Zackenrades 21 auf. Die Auswerteelektronik 22 erfasst die Sensorsignale und errechnet aus einer bestimmten Anzahl von Messwerten der Ballenzuwächse einen Mittelwert für den Ballenzuwachs pro Zubringerhub des Erntegutes 13 aus dem

Zubringerkanal 12 in den Presskanal 10 und anschließendem Verdichten dieser Emtegutmenge durch den Presskolben 9. Aus dem Mittelwert und dem Wert für die vorgegebene Ballen-Solllänge wird dann die Anzahl der notwendigen Zubringerhübe errechnet, die zur Erreichung der Ballen-Solllänge notwendig sind. Es ist auch denkbar in diese Berechnungen weitere Parameter oder Messwerte, z. B. zum Erntegut oder Maschinendaten einfließen zu lassen. Nach Ausführung der errechneten Soll-Zubringerhübe erfolgt das Abbinden des Ballens durch den von der Auswerteelektronik 22 ausgelösten Bindevorgang der Bindevorrichtung 15.

Durch die Besonderheit des erfindungsgemäßen Verfahrens zur Erfassung und Regelung der Ballenlänge über die Rechnung mit Mittelwerten, werden eventuelle Ausreißer der Messergebnisse durch Messfehler oder durch mögliche Abtastungenauigkeiten an den Ballenübergängen geglättet und somit die Ballen-Solllänge noch präziser erreicht.

Durch die Regelung der Ballenlänge über die Anzahl der Zubringerhübe und damit über die Anzahl der sehr exakten Ballenzuwächse, wird auch nach völliger Entleerung der Presskammer 10 bereits der erste Ballen in der voreingestellten Solllänge gefertigt. Nachdem dieser erste Ballen bei entsprechendem Längenfortschritt das Zackenrad 21 erreicht und dann die ersten Ballenzuwachswerte von der Auswerteelektronik 22 erfasst werden, fließen die bis zu diesem Zeitpunkt für diesen Ballen erfolgten Zubringerhübe in die weitere Berechnung der Soll-Zubringerhübe mit ein. Da nach jedem Zubringerhub auch tatsächlich ein gleichmäßiger Ballenzuwachs erfolgt, ist diese Regelung nach dem erfindungsgemäßen Verfahren bereits für den ersten Ballen genau so exakt wie für alle weiteren Ballen. Da bei diesem Verfahren keine angenommenen Ballenzuwächse in die Berechnung eingehen, die aber tatsächlich von null bis max. variieren können, wie es bei anderen Verfahren und Vorrichtungen der Fall ist, ist es nach dem vorgeschlagenem Verfahren außerdem vorteilhaft möglich, dass eine Mindestlänge oder eine Maximallänge vorgegeben wird und diese auch tatsächlich nicht unter- bzw. überschritten wird.

Weitere Ausführungsformen der vorgeschlagenen Vorrichtung zur Erfassung und Regelung der Ballenlänge sind möglich, so ist z. B. die Ermittlung des Ballenzuwachses über die Messung der abgezogenen Bindegarnlänge zwischen zwei Zubringerhüben denkbar.

Die Bedienung der Regelung könnte über eine fembedienbare Bedieneinheit 23 mit Anzeige der Vorgaben und der Betriebszustände vom Zugfahrzeug aus erfolgen.

## Patentansprüche

1. Vorrichtung zur Erfassung und Regelung der Ballenlänge an einer Aufsammelpresse für landwirtschaftliches Erntegut, welche eine Aufnahmevorrichtung (18), eine nachgeordnete Fördereinrichtung mit oder ohne Schneideinrichtung zur Förderung des Erntegutes in einen Zubringerkanal (12), eine vom Füllgrad des Zubringerkanals (12) abhängig gesteuerte Förderung des Erntegutes aus dem Zubringerkanal (12) in einen Presskanal (10) mittels eines Zubringerhubes, einen im Presskanal (10) angeordneten, alternierend bewegten Presskolben (9) zum Verdichten des Erntegutes, sowie eine Bindevorrichtung (15) zum Abbinden des fertigen Ballens mit Bindematerial umfasst, **dadurch gekennzeichnet, dass** der Ballenzuwachs, welcher bei der Verdichtung des während eines jeden Zubringerhubes aus dem Zubringerkanal (12) in den Presskanal (10) überführten Erntegutes entsteht, durch zumindest einen Sensor erfasst und einer Auswerteelektronik (22) als Signal zugeführt wird und das dieses Signal in eine gemittelte und/oder statistische Rechengröße umsetzbar ist, welche zur Errechnung der notwendigen Anzahl der Zubringerhübe zur annähernden Erreichung der Ballen Soll-Längenvorgabe nutzbar ist und nach Ausführung der errechneten Soll-Zubringerhübe die Bindevorrichtung (15) auslöst.

2. Vorrichtung nach Anspruch 1, **dadurch gekennzeichnet, dass** die Ballen Soll-Längenvorgabe über eine Bedieneinheit (23) fernbedienbar ist.

3. Vorrichtung nach einem der Ansprüche 1 bis 2, **dadurch gekennzeichnet, dass** der mindestens eine Sensor zur Erfassung des Ballenzuwachses die tatsächliche Längenänderung des Ballens nach einem Zubringerhub und anschließendem Presshub des Presskolbens (9) erfasst.

4. Vorrichtung nach einem der Ansprüche 1 bis 3, **dadurch gekennzeichnet, dass** der Sensor ein mit dem Ballen in Berührung stehendes Zackenrad (21) aufweist, welches mit Bewegungsfühlem zusammenwirkt.

5. Vorrichtung nach einem der Ansprüche 1 bis 3, **dadurch gekennzeichnet, dass** der Sensor den Ballenzuwachs indirekt über die abgezogene Bindegarnlänge misst.

6. Verfahren zur Erfassung und Regelung der Ballenlänge an einer Aufsammelpresse für landwirtschaftliches Erntegut mittels einer Vorrichtung gemäß dem Oberbegriff von Anspruch 1 umfassend folgende Schritte:
- Ermitteln der Soll-Anzahl der Ballenzuwachsschritte aus einer voreinstellbaren Soll Ballenlänge;
- Erfassen der Ist-Anzahl der Ballenzuwachsschritte über Sensormittel;
- Vergleichen der Ist-Anzahl mit der Soll-Anzahl der Ballenzuwachsschritte;
- Auslösen der Bindevorrichtung (15) bei Erreichen der Soll-Anzahl der Ballenzuwachsschritte,
**dadurch gekennzeichnet, dass**
- pro Zubringerhub des Erntegutes aus dem Zubringerkanal (12) in den Presskanal (10) und anschließender Verdichtung des zugeführten Erntegutes durch den Presskolben (9) ein Ballenzuwachsschritt erfolgt,
- Sensormittel den Ballenzuwachs je Zubringerhub ermitteln,
- eine Auswerteelektronik (22) die Sensorwerte des Ballenzuwachses pro Zubringerhub erfasst und in eine gemittelte und/oder statistische Rechengröße umsetzt,
- die Auswerteelektronik (22) aus der gemittelten und/oder statistischen Rechengröße und mindestens dem Wert der Soll-Längenvorgabe durch einen wählbaren Algorithmus einen Wert für die Anzahl der Soll-Zubringerhübe errechnet,
- die Auswerteelektronik die Anzahl der Ist-Zubringerhübe mit der Anzahl der Soll-Zubringerhübe vergleicht und bei Erreichen der Anzahl der Soll-Zubringerhübe die Bindevorrichtung (15) auslöst.

7. Verfahren nach Anspruch 6, **dadurch gekennzeichnet, dass** die Berechnung der Anzahl der Soll-Zubringerhübe nach jeder Erfassung eines Ballenzuwachses neu erfolgt.

8. Verfahren nach einem der Ansprüche 6 bis 7, **dadurch gekennzeichnet, dass** Sensorwerte über die Gutbeschaffenheit in die Berechnung der Anzahl der Soll-Zubringerhübe eingehen.

9. Verfahren nach einem der Ansprüche 6 bis 8, **dadurch gekennzeichnet, dass** Maschinendaten in die Berechnung der Anzahl der Soll-Zubringerhübe eingehen.

10. Verfahren nach einem der Ansprüche 6 bis 9, **dadurch gekennzeichnet, dass** nach völliger Entleerung der Presskammer (10) die Auswerteelektronik (22) die bis zur Erfassung des ersten Ballenzuwachses durchgeführte Anzahl der Zubringerhübe speichert und dann in die Berechnung der Anzahl der Soll-Zubringerhübe mit einbezieht.

## Claims

1. Arrangement for detecting and controlling bale length in a pick-up baler for harvested agricultural crops, which pick-up baler comprises a pick-up device (18), a feeding means situated downstream, having or not having a cutting means, for feeding the harvested crop into a delivery passage (12), a means for feeding the harvested crop out of the delivery passage (12) and into a baling passage (10) by means of a delivery stroke, which means for feeding is controlled as a function of the degree to which the delivery passage is filled, a baling piston (9) for compressing the harvested crop, which baling piston (9) is arranged in the baling passage (10) and is moved in reciprocation, and a binding device (15) for binding the finished bale with binding material, **characterised in that** the increase in the size of the bale which occurs when the harvested crop which is transferred from the delivery passage (12) to the baling passage (10) during each delivery stroke is compressed is detected by at least one sensor and is fed in the form of a signal to analysing electronics (22), and **in that** this signal can be converted into an averaged and/or statistical operand which can be used to calculate the number of delivery strokes required to approximately obtain the desired preset length of bale and the signal triggers the binding device (15) on the calculated desired delivery strokes being performed.

2. Arrangement according to claim 1, **characterised in that** the desired preset length of bale can be remotely controlled via a control unit (23).

3. Arrangement according to either of claims 1 and 2, **characterised in that** the at least one sensor for detecting the increase in the size of the bale detects the actual change in the length of the bale after a delivery stroke and the subsequent baling stroke of the baling piston (9).

4. Arrangement according to one of claims 1 to 3, **characterised in that** the sensor has a toothed wheel (21) which is in contact with the bale and which co-operates with movement sensors.

5. Arrangement according to one of claims 1 to 3, **characterised in that** the sensor measures the increase in the size of the bale indirectly by way of the length of binding twine which is drawn out.

6. Method of detecting and controlling bale length in a pick-up baler for harvested agricultural crops by means of an arrangement according to the preamble of claim 1, comprising the following steps:
- determination of the desired number of stepped increases in the size of the bale from a presettable desired length of bale,
- detection of the actual number of stepped increases in the size of the bale via sensor means,
- comparison of the actual number of stepped increases in the size of the bale with the desired number,
- triggering of the binding device (15) when the desired number of stepped increases in the size of the bale is reached,
**characterised in that**
- one stepped increase in the size of the bale takes place for each delivery stroke of the harvested crop from the delivery passage (12) into the baling passage (10) followed by compression, by the baling piston (9), of the harvested crop which has been fed in,
- sensor means determine the increase in the size of the bale for each delivery stroke,
- for each delivery stroke, analysing electronics (22) detect the sensor values for the increase in the size of the bale and convert them into an averaged and/or statistical operand,
- from the averaged and/or statistical operand and at least the value representing the desired preset length, the analysing electronics (22) calculate, by means of a selectable algorithm, a value for the desired number of delivery strokes,
- the analysing electronics (22) compare the number of actual delivery strokes with the desired number of delivery strokes and trigger the binding device (15) when the desired number of delivery strokes is reached,

7. Method according to claim 6, **characterised in that** the desired number of delivery strokes is calculated afresh after each detection of an increase in the size of the bale.

8. Method according to either of claims 6 and 7, **characterised in that** sensor values relating to the characteristics of the crop are included in the calculation of the desired number of delivery strokes.

9. Method according to one of claims 6 to 8, **characterised in that** machine data is included in the calculation of the desired number of delivery strokes.

10. Method according to one of claims 6 to 9, **characterised in that**, on the baling chamber (10) being completely emptied, the analysing electronics (22) store the number of delivery strokes which were executed until the detection of the first increase in the size of the bale and then include it in the calculation of the desired numbered of delivery strokes.

## Revendications

1. Dispositif permettant d'enregistrer et de régler la longueur des balles sur une ramasseuse-presse pour une récolte agricole, comprenant un dispositif de réception (18), un dispositif d'acheminement en aval avec ou sans dispositif de coupe pour l'acheminement de la récolte dans un canal d'alimentation (12), commandé en fonction du degré de remplissage du canal d'alimentation (12), hors du canal d'alimentation (12) jusque dans un canal de pressage (10) au moyen d'une course d'alimentation, un piston de pressage (9) disposé dans le canal de pressage (10) et mobile en alternance pour comprimer la récolte, ainsi qu'un dispositif de liage (15) pour lier la balle finie à l'aide d'un matériau de liage,
**caractérisé en ce que**
la croissance de la balle, produite par la compression de la récolte transférée hors du canal d'alimentation (12) dans le canal de pressage (10) pendant chaque course d'alimentation, est enregistrée par au moins un capteur et est transmise à une électronique d'exploitation (22) sous forme de signal, ce signal pouvant être converti en une grandeur de calcul pondérée et/ou statistique pouvant être utilisée pour le calcul du nombre de courses d'alimentation nécessaire pour atteindre approximativement la valeur de consigne de longueur de balle et qui déclenche le dispositif de liage (15) après l'exécution des courses d'alimentation de consigne calculées.

2. Dispositif selon la revendication 1,
**caractérisé en ce que**
la valeur de consigne de longueur des balles est commandée à distance via une unité de commande (23).

3. Dispositif selon l'une des revendications 1 à 2,
**caractérisé en ce que**
le au moins un capteur pour l'enregistrement de la croissance des balles enregistre la variation de longueur effective de la balle après une course d'alimentation puis une course de pressage du piston de pressage (9).

4. Dispositif selon l'une des revendications 1 à 3,
**caractérisé en ce que**
le capteur présente un pignon-métreur (21) en contact avec la balle, qui coopère avec des détecteurs de mouvement.

5. Dispositif selon l'une des revendications 1 à 3,
**caractérisé en ce que**
le capteur mesure la croissance des balles indirectement sur la longueur du fil de liage tiré.

6. Procédé permettant d'enregistrer et de régler la longueur des balles sur une ramasseuse-presse pour une récolte agricole au moyen d'un dispositif conforme au préambule de la revendication 1, comprenant les étapes suivantes :
- détermination du nombre de consigne, d'étapes de croissance de la balle à partir d'une longueur de balle de consigne préréglée ;
- enregistrement du nombre réel d'étapes de croissance de la balle par des moyens de détection ;
- comparaison du nombre réel d'étapes de croissance de la balle avec le nombre de consigne d'étapes de croissance de la balle ;
- déclenchement du dispositif de liage (15) lorsque l'on atteint le nombre de consigne d'étapes de croissance de la balle,
**caractérisé en ce que**
- pour chaque course d'alimentation de la récolte hors du canal d'alimentation (12) dans le canal de pressage (10) et pour chaque compression suivante de la récolte acheminée par le piston de pressage (9), on franchit une étape de croissance de la balle,
- des moyens de détection déterminent la croissance de la balle à chaque course d'alimentation,
- une électronique d'exploitation (22) enregistre les valeurs des capteurs de croissance de la balle à chaque course d'alimentation et les convertit en une grandeur de calcul pondérée et/ou statistique,
- l'électronique d'exploitation (22), à partir de la grandeur de calcul pondérée et/ou statistique et d'au moins la valeur de consigne de longueur, calcule, par un algorithme sélectionné, une valeur pour le nombre de courses d'alimentation de consigne,
- l'électronique d'exploitation compare le nombre de courses d'alimentation réelles avec le nombre de courses d'alimentation de consigne et déclenche le dispositif de liage (15) lorsque l'on atteint le nombre de courses d'alimentation de consigne.

7. Procédé selon la revendication 6,
**caractérisé en ce que**
le calcul du nombre de courses d'alimentation de consigne est renouvelé après chaque enregistrement d'une croissance de la balle.

8. Procédé selon l'une des revendications 6 à 7,
**caractérisé en ce que**
les valeurs des capteurs sur l'approvisionnement en matière entrent dans le calcul du nombre de courses d'alimentation de consigne.

9. Procédé selon l'une des revendications 6 à 8,
**caractérisé en ce que**
des données relatives à la machine entrent dans le calcul du nombre de courses d'alimentation de consigne.

10. Procédé selon l'une des revendications 6 à 9,
**caractérisé en ce qu'**
après un vidage complet de la chambre de pressage (10), l'électronique d'exploitation (22) stocke le nombre de courses d'alimentation exécutées jusqu'à l'enregistrement de la première croissance de la balle, puis l'inclut dans le calcul du nombre de courses d'alimentation de consigne.
